# FASCICULE DE BREVET EUROPEEN

(11) **EP 0 736 945 B1**
(45) Date de publication et mention de la délivrance du brevet: **24.09.2003**
(21) Numéro de dépôt: 96420111.5
(22) Date de dépôt: 03.04.1996
(51) Int. Cl.: H02H 7/04, H01H 85/042, H01H 79/00

(54) **Déconnecteur-limiteur de protection pour transformateurs électriques triphasés**
Trenner-Begrenzungs-Schutz für dreiphasige elektrische Transformatoren
Disconnector-limit protection for three-phase electric transformers

(30) Priorité: 04.04.1995 FR 9504213; 02.08.1995 FR 9509626
(43) Date de publication de la demande: 09.10.1996
(73) Titulaire: Ferraz Shawmut, 69100 Villeurbanne (FR)
(72) Inventeur: Rambaud, Thierry, 69440 Genas (FR)
(74) Mandataire: Myon, Gérard Jean-Pierre

(56) Documents cités:
- DE-A- 3 426 404
- DE-C- 288 372
- US-A- 2 945 108
- US-A- 3 319 026
- US-A- 4 002 949
- PATENT ABSTRACTS OF JAPAN vol. 015, no. 036 (E-1027), 29 Janvier 1991 & JP-A-02 273433 (MATSUSHITA ELECTRIC WORKS LTD), 7 Novembre 1990,
- traduction entier du brevet JP-A-2273433

## Description

La présente invention a trait à la protection des transformateurs électriques triphasés, notamment du type à bain d'huile.

Cette protection est à l'heure actuelle généralement assurée à l'aide de limiteurs de courant généralement constitués par des fusibles disposés en amont des bornes d'entrée des bobinages du primaire. Or, il n'est pas rare qu'en cas de surintensité accidentelle l'un seul de ces fusibles fonctionne, les deux autres continuant à alimenter les bobinages correspondants à travers la terre, en risquant de provoquer d'une part une explosion dangereuse, d'autre part le fonctionnement du sectionneur automatique de courant qui assure l'alimentation de l'ensemble du réseau électrique sur lequel le transformateur est branché.

C'est à cet inconvénient qu'entend principalement remédier la présente invention qui s'est fixé pour but d'opérer systématiquement la coupure totale des trois phases d'alimentation du transformateur dans le cas où une surintensité accidentelle aurait entraîné la fusion de l'un quelconque des trois fusibles de protection, en évitant de la sorte tout risque d'explosion et en localisant le défaut de courant au seul transformateur avarié.

Il est connu des documents Patent Abstracts of Japan vol. 015, N° 036 (E-1027), et JP-A-02 273 433 un dispositif de protection d'une charge, dans lequel trois actionneurs à électro-aimant, ou déclencheurs, sont insérés chacun entre une borne d'entrée de cette charge et un limiteur de protection. Les actionneurs à électro-aimant sont choisis pour réagir à un courant de valeur plus faible que celui nécessaire à la rupture des limiteurs. En cas de dysfonctionnement, les actionneurs à électro-aimant, parcourus par le courant à limiter, opèrent la fermeture de circuits de court-circuit, ce qui provoque la rupture des limiteurs. Dans ce dispositif toutefois, les circuits de court-circuit restent ouverts si une phase seulement connaît une sur-intensité et le problème précité n'est pas résolu.

L'invention a pour objet le déconnecteur-limiteur de protection qui est défini à la revendication 1.

Conformément à un mode de mise en oeuvre préféré de la disposition qui précède, les déclencheurs sont agencés à la manière des percuteurs fréquemment associés aux cartouches fusibles. En conséquence, chaque déclencheur comprend un doigt mobile qui est retenu à l'encontre de moyens élastiques d'actionnement par un fil fusible monté en parallèle avec le ou les éléments fusibles du déclencheur branché en amont de l'une des trois bornes d'entrée du primaire du transformateur.

Les moyens électro-mécaniques de court-circuitage peuvent être constitués soit par un court-circuiteur central fonctionnant par mise à la terre des trois phases du transformateur, soit par un circuit électrique de commande lié aux trois bornes d'entrée des bobinages du primaire, ce circuit, normalement ouvert, étant fermé sous l'effet du déplacement de l'organe mobile de l'un quelconque des déclencheurs.

Suivant une autre caractéristique de l'invention, on fait comporter au déconnecteur-limiteur des moyens d'actionnement de sécurité propre à assurer le fonctionnement de l'un des limiteurs sous l'effet de la modification accidentelle d'un paramètre autre qu'une surintensité, par exemple le niveau, la température ou la pression de l'huile dans le cas d'un transformateur du type à bain d'huile.

Le dessin annexé, donné à titre d'exemple, permettra de mieux comprendre l'invention, les caractéristiques qu'elle présente et les avantages qu'elle est susceptible de procurer:
- Figure 1 est une coupe axiale schématique d'un déconnecteur-limiteur établi conformément à une première forme de mise en oeuvre de l'invention ;
- Figure 2 est une coupe axiale partielle montrant à plus grande échelle un détail de l'un des trois déclencheurs du dispositif suivant figure 1.
- Figure 3 reproduit figure 1 après déclenchement du dispositif et isolement du transformateur auquel il est associé.
- Figure 4 illustre très schématiquement le branchement du dispositif sur l'alimentation du transformateur.
- Figure 5 est une coupe axiale de l'un des trois déclencheurs d'un déconnecteur-limiteur établi suivant un autre mode de mise en oeuvre de l'invention.
- Figure 6 reproduit figure 5 après fonctionnement (fusion) de l'élément fusible incorporé à ce déclencheur.
- Figure 7 est un schéma illustrant l'agencement des trois déclencheurs et leur raccordeùent mutuel en amont des bobinages du primaire du transformateur.
- Figure 8 et 9 montrent l'agencement et le fonctionnement d'un déclencheur équipé d'un dispositif pour le sectionnement mécanique de l'élément fusible et du fil de retenue.
- Figure 10 est une vue en perspective d'un court-circuiteur monté sur le secondaire du transformateur à protéger pour assurer le fonctionnement de l'un des déclencheurs sous l'effet d'une variation d'un paramètre autre qu'une surintensité.
- Figure 11 et 12 sont deux vues en plan du court-circuiteur suivant figure 10, illustrant le fonctionnement de celui-ci.
- Figure 13 est un schéma montrant l'insertion du court circuiteur suivant figure 10 à 12 dans le système de protection d'un transformateur.
- Figure 14 illustre en coupe axiale une variante de réalisation du déclencheur suivant figure 5 et 6.

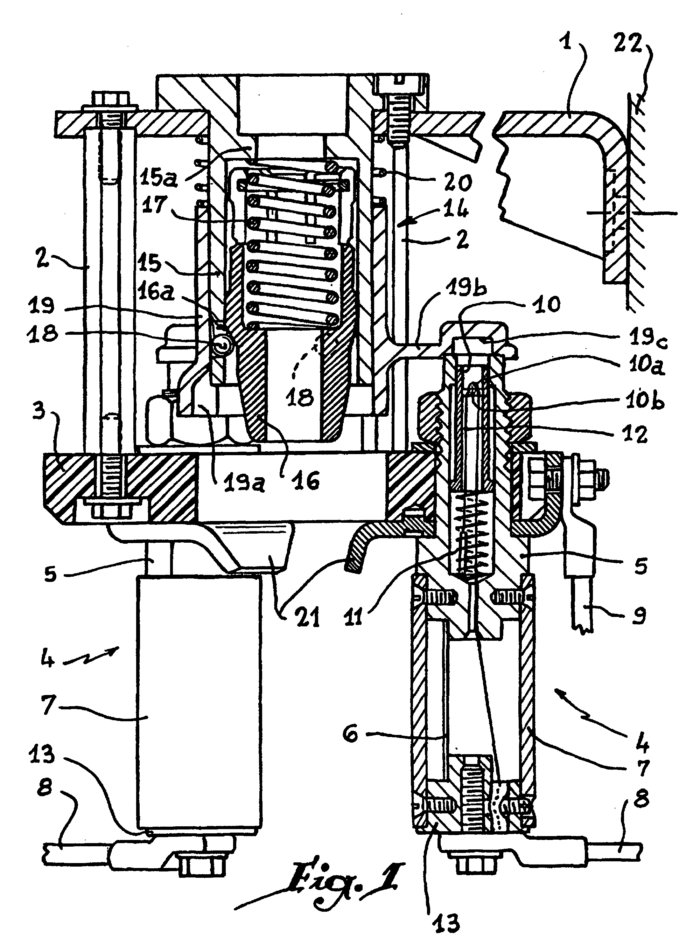

En figure 1, la référence 1 désigne une console métallique qu'on peut supposer être fixée à la cuve du transformateur à protéger, cuve qui est systématiquement mise à la terre. Cette console 1 supporte par trois colonnettes 2 un disque isolant 3 qui est équpé de trois déclencheurs 4, disposés parallèlement à l'axe dudit disque 3.

Ces trois déclencheurs 4 sont identiques, de sorte qu'il suffira d'en décrire un en détail.

Chaque déclencheur 4 comprend un corps tubulaire 5 dont la base renferme au moins un élément fusible 6 logé à l'intérieur d'un foureau isolant 7 qui est branché entre le condusteur 8 correspondant à l'une des trois phases d'alimentation du transformateur considéré et le corps 5 précité, lui-même relié par un conducteur 9 à la borne d'entrée correspondante du primaire dudit transformateur.

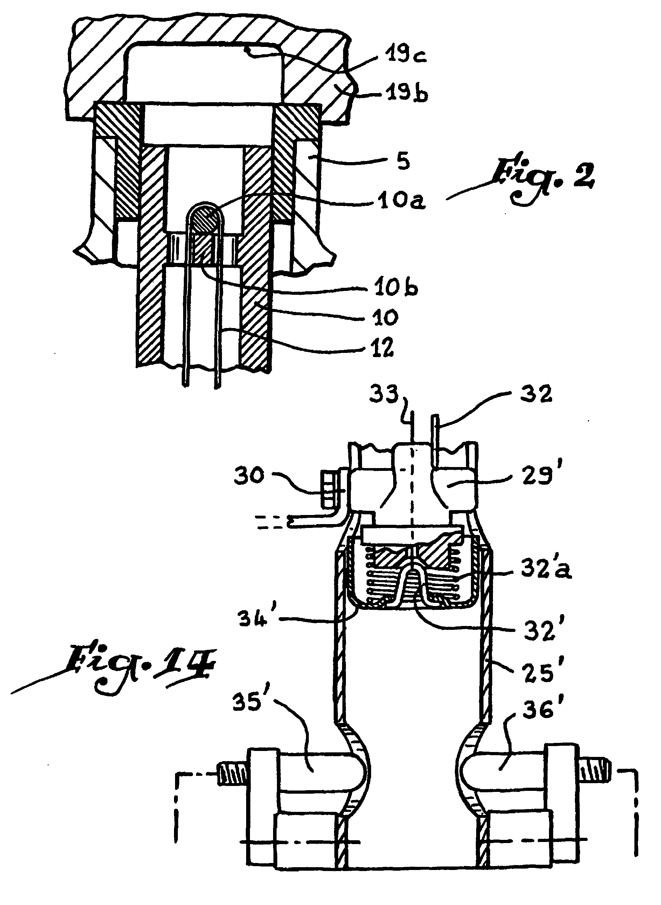

A l'intérieur du corps tubulaire 5 coulisse axialement un doigt 10 qu'un ressort 11 tend à expulser vers le haut. Ce doigt 10 est retenu à la position rétractée par un fil 12 réalisé en un métal fusible ; les extrémités de ce fil 12 sont respectivement fixées au corps 5 et à la borne inférieure 13 prévue à la base du fourreau isolant 7 pour le branchement du conducteur 8, ledit fil étant renvoyé par une goupille 10a (figure 2) prenant appui contre une traverse 10b du doigt 10.

Le fil fusible de retenue 12 se trouve ainsi branché en parallèle avec l'élément fusible principal 6, de sorte que lorsque cet élément 6 fond sous l'effet d'une surintensité accidentelle, le fil 12 transmet l'intégralité du courant et fond à son tour, en libérant le doigt 10 qui est expulsé vers le haut par le ressort 11.

Au-dessus des trois déclencheurs 4, le dispositif comporte un court-circuiteur central 14 qui pomprend un manchon métallique 15 fixé à la console 1 entre les colonnettes 2. A l'intérieur de ce manchon 15 coulisse axialement un contact mobile 16, prévu tubulaire afin de renfermer un ressort 17 qui, prenant appui contre un épaulement interne 15a du manchon, tend à repousser vers le bas ledit contact 16.

Il convient ici d'observer que le ressort 17 a également pour fonction d'assurer la liaison électrique entre le contact mobile 16 et la terre à laquelle la console 1 et le manchon 15 sont eux-mêmes reliés.

La retenue axiale du contact 16 en position haute à l'encontre du ressort 17 est assurée à l'aide de trois petites billes 18 engagées dans des perforations pratiquées dans la base ouverte du manchon 15. Une gâchette tubulaire 19, montée à coulissement axial autour du manchon 15 et soumise à l'action d'un ressort supérieur 20, oblige les billes 18 à s'appliquer contre la paroi extérieure du contact 16, au-dessous d'un épaulement annulaire 16a de ce dernier. Toutefois, la partie inférieure ouverte de la gâchette 19 présente des emboutis 19a à plus grand diamètre, de sorte que lorsque cette gâchette 19 est déplacée vers le haut à l'encontre du ressort 20, les billes 18 sont chassées radialement vers l'extérieur en libérant le contact 16 qui se déplace brusquement vers le bas sous l'effet de son ressort 17.

La gâchette 19 est en outre solidaire de trois bras radiaux 19b qui se trouvent disposés suivant les axes verticaux des corps tubulaires 5 des déclencheurs 4. L'extrémité libre de chacun de ces bras 19b est conformée pour présenter une empreinte 19c ouverte vers le bas, c'est-à-dire en direction du doigt 10 renfermé par le déclencheur 4 correspondant.

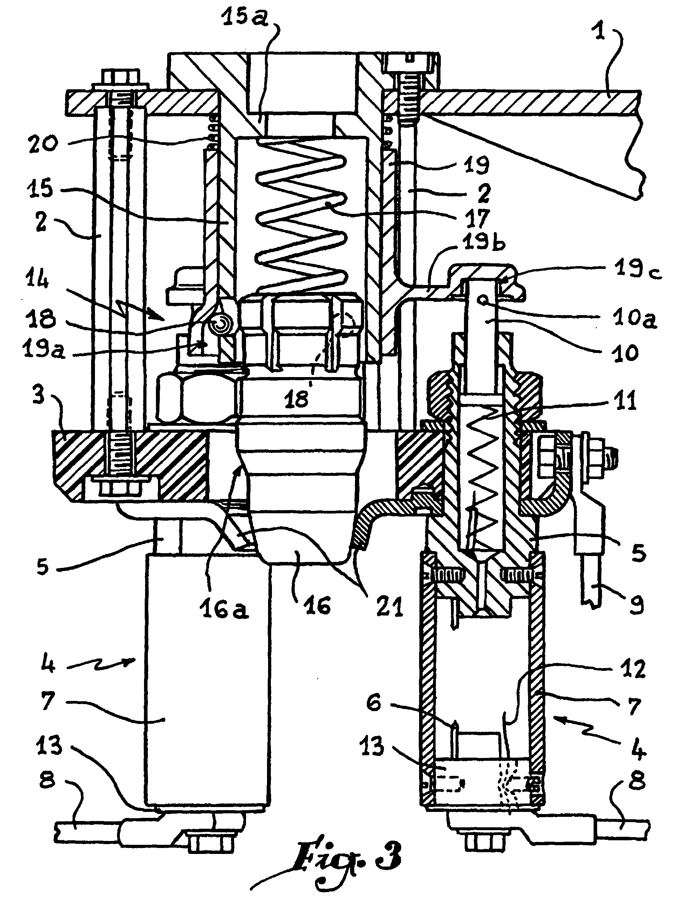

Le court-circuiteur 14 comprend encore trois contacts fixes 21 qui sont portés par le disque isolant 3 tout en étant rendus solidaires du corps tubulaire 5 de chacun des déclencheurs 4. Chaque contact fixe 21 forme borne pour la fixation de l'un des conducteurs 9 qui alimentent les bobinages du transformateur auquel le déconnecteur-limiteur est associé. les trois contacts 21 sont disposés et conformés afin de constituer butées pour le contact mobile 16, comme illustré en figure 3, une fois ledit contact libéré par la gâchette 19.

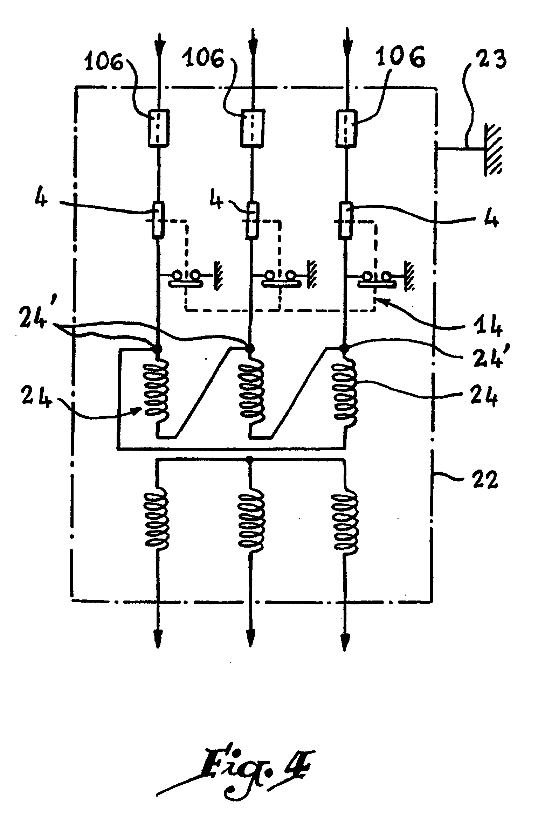

Figure 4 fait bien apparaître la schéma de branchement du dispositif sur l'alimentation du transformateur considéré dont la cuve, référencée 22, est reliée à la terre en 23. On aperçoit en 106 les fusibles limiteurs reliés en série avec les déclencheurs 4, ainsi que la mise à la terre assurée par le court-circuiteur 14.

Lorsque le déconnecteur-limiteur se trouve en situation normale conforme à ce qui est représenté en figure 1, le courant électrique d'alimentation traverse les trois éléments fusibles 6 pour accéder aux trois bobinages 24 du primaire du transformateur. Dans le cas d'une surintensité accidentelle, la rupture du fusible 6 de l'un au moins des déclencheurs 4 provoque la fusion du fil de retenue 12 du déclencheur considéré et la libération du doigt 10 correspondant. Ce doigt 10 est brutalement repoussé vers le haut et actionne en conséquence la gâchette 19 qui libère à son tour le contact 16.

On se trouve alors à la position illustrée en figure 3 et l'on conçoit que l'application du contact mobile 16 contre les contacts fixes 21 du court-circuiteur 14 assure la mise à la terre du ou des fusibles 6 restés intacts et des fusibles 106 disphasés correspondants. Ces fusibles 106 se rompent immédiatement en opérant le sectionnement complet du transformateur dont les trois bobinages 24 ne sont plus alimentés. On évite de la sorte tout risque d'explosion du transformateur et l'on circonscrit l'avarie à ce dernier, sans que le réseau sur lequel celui-ci est branché puisse être affecté.

Il va de soi que le fonctionnement correct du dispositif suivant l'invention implique un calibrage précis des fusibles 6, 106 et 12. On conçoit en outre que les fusibles 6 peuvent être remplacés par tout autre appareillage de limitation et de coupure. L'agencement du court-circuiteur 14 est susceptible d'être différent de celui qui a été exposé.

Le système exposé ci-dessus assure bien la protection efficace des transformateurs triphasés, mais il implique une construction relativement complexe et coûteuse, ainsi qu'un encombrement qui peut gêner son implantation dans le transformateur.

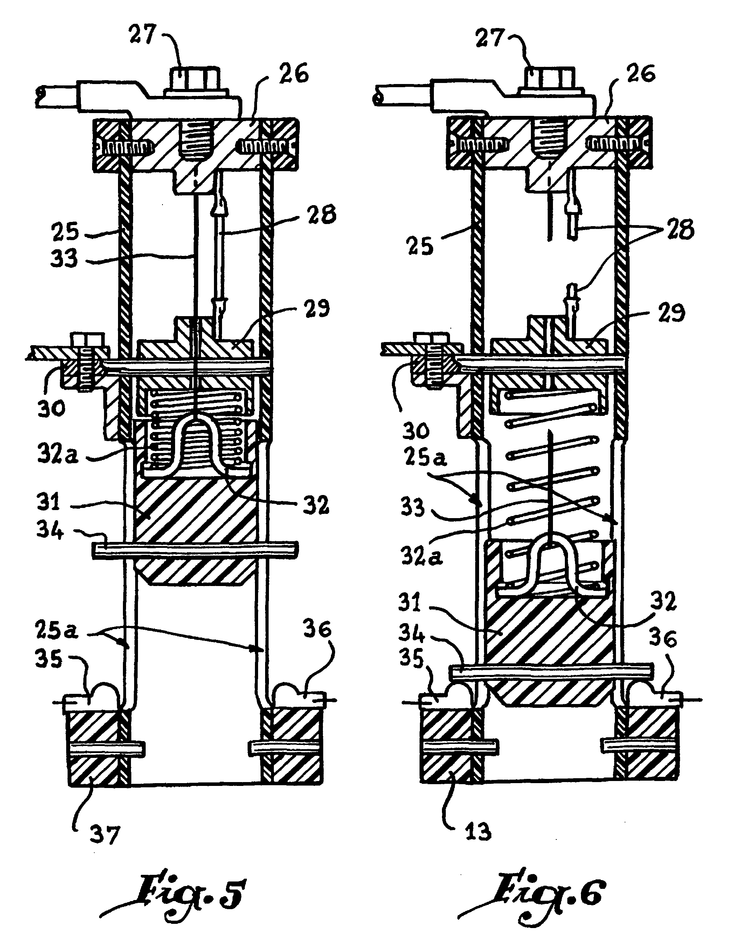

En vue de remédier à ces inconvéniente, on peut avantageusement adopter la forme de réalisation illustrée en figure 5 à 7.

En figure 5, la référence 25 désigne un fourreau isolant qui est équipé d'une tête conductrice 26 pourvue d'une borne d'entrée 27. Cette tête 26 est reliée électriquement par un élément fusible 28 à un dé métallique 29 rigidement fixé au fourreau 25, ce dé 29 étant latéralement solidaire d'une borne de sortie 30.

Au dessous du dé fixe 29, le fourreau isolant 25 renferme un doigt mobile 31 qu'un ressort 32a prenant appui contre ledit dé, tend à repousser vers le bas. Le doigt 31 est toutefois maintenu en position haute par un étrier 32 qu'un fil fusible 33, traversant axialement le dé 29 tout en étant lié électriquement à celui-ci, relie à la tête 26. Ce fil 33 se trouve ainsi branché en parallèle avec l'élément fusible de protection 28.

Le doigt 31 porte une barrette transversale 34 en métal qui est guidée dans des lumières longitudinales 25a du fourreau 25. Les extrémités de cette barrette mobile 34 sont prévues dépassantes de manière à pouvoir coopérer en fin de course vers le bas, avec deux contacts ou plots fixes 35 et 36 prévus sur une embase isolante 37 du fourreau 25.

Le fonctionnement d'un tel déclencheur se comprend aisément. Aussi longtemps que l'intensité du courant qui traverse l'appareil entre les bornes 27 et 30 est inférieure à la valeur de fusion de l'élément fusible 28, le doigt porte-barrette 31 est maintenu à la position haute illustrée en figure 5 si bien que le circuit associé aux plots 35 et 36 est ouvert.

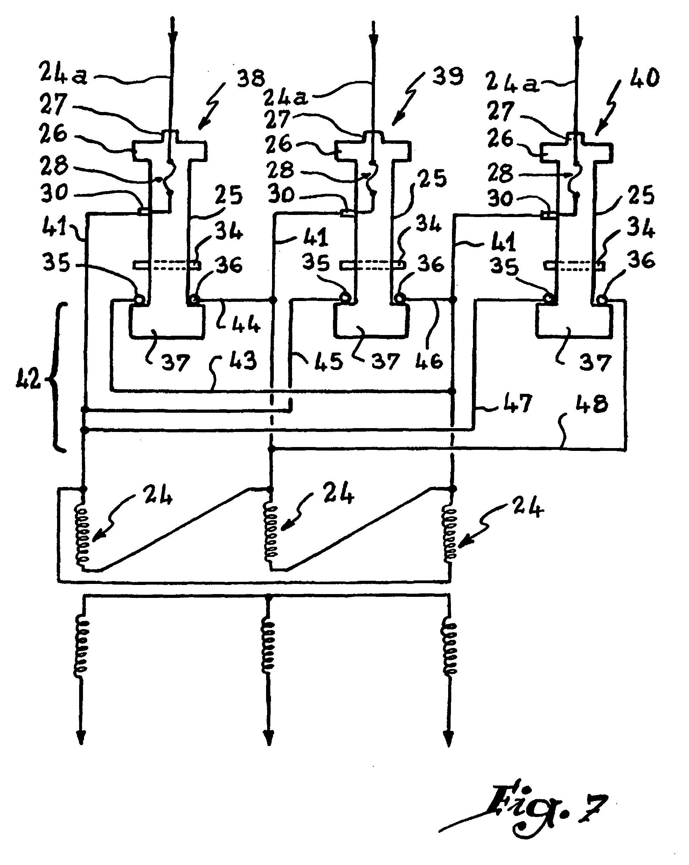

Si cet élément fusible 28 vient à fonctionner à la suite d'une surintensité accidentelle, le fil 33, calibré de façon à ne pouvoir transiter qu'une intensité inférieure à celle de l'élément fusible 28, se sectionne et libère le doigt 31 (figure 6) dont la barrette 34 vient, à la manière d'un contact mobile, porter simultanément contre les deux plots 35 et 36. Le circuit associé à ces plots est ainsi fermé.

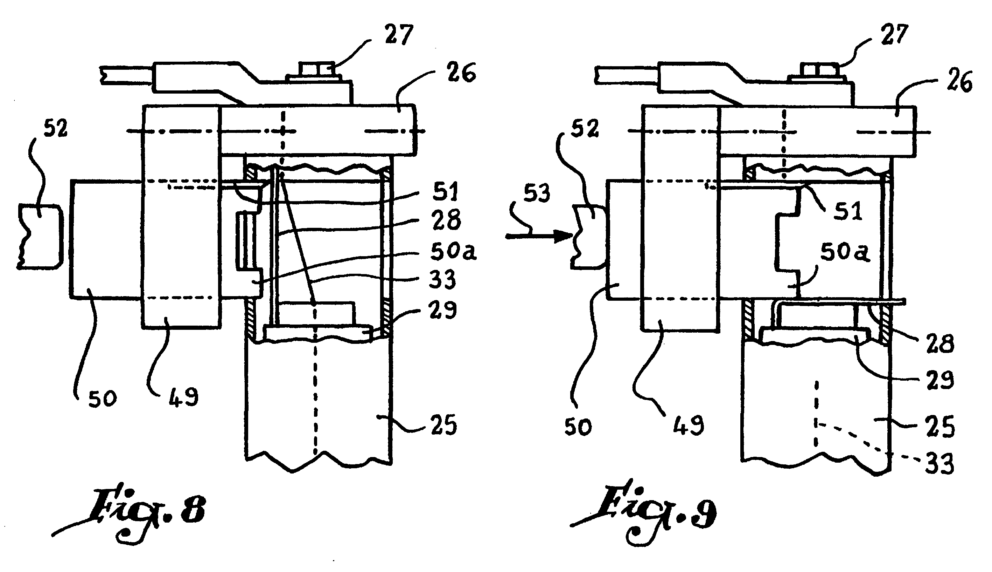

Comme montré en figure 7, le déconnecteur-limiteur suivant l'invention comprend trois déclencheurs identiques à celui décrit ci-dessus en référence à figure 5 et 6. Chacun de ces déclencheurs, référencés 38, 39 et 40, est branché, en amont des bobinages 24 du primaire du transformateur triphasé à protéger, sur l'une des trois phases d'alimentation de celui-ci. Chacune de ces phases 24a est branchée sur la borne d'entrée 27 du déclencheur correspondant, la borne de sortie 30 de celui-ci étant reliée par un conducteur 41 à l'une des bornes d'entrée des bobinages 24 du primaire du transformateur.

Aux plots 35 et 36 de ces trois déclencheurs 38, 39 et 40 est associé un circuit de commande 42 et l'analyse de ce circuit 42 montre :
- en ce qui concerne le déclencheur 38, que son plot 35 est relié par un conducteur 43 au conducteur 41 reliant la borne de sortie 30 du déclencheur 40 au bobinage 24 correspondant tandis que son plot 36 est réuni par un conducteur 44 au conducteur 41 reliant le déclencheur 39 à son bobinage 24 ;
- en ce que concerne le déclencheur 39, que son plot 35 est relié par un conducteur 45 au conducteur 41 reliant le déclencheur 38 à son bobinage 24, tandis que sur son plot 36 est fixé un conducteur 46 aboutissant au conducteur 41 reliant le déclencheur 40 à son bobinage 24 ;
- et enfin en ce qui concerne le déclencheur 40, que ses plots 35 et 36 sont sélectivement reliés par des conducteurs 47 et 48 au conducteur 41 issu du déclencheur 38, respectivement au conducteur 41 issu du déclencheur 39.

Le circuit de commande 42 ainsi constitué se trouve à l'état ouvert par suite de la position haute des trois barrettes 34, ce qui évite tout court-circuit entre les phases. Il est clair toutefois que le fonctionnement de l'un quelconque des trois déclencheurs 38, 39 et 40 provoque systématiquement, par sectionnement du fil de retenue 33, abaissement du doigt 31 et portée simultanée de sa barrette 34 contre les deux plots correspondants 35 et 36, la fermeture d'une partie du circuit 42 et, par court-circuit inter-phases, la fusion des éléments fusibles 28 des deux autres déclencheurs et des fusibles ou limiteurs 106 correspondants. Le transformateur se trouve ainsi complètement déconnecté du réseau d'alimentation.

Dans la variante de mise en oeuvre illustrée en figure 14, le fourreau 25' renferme à coulissement axial un contact cylindrique 34' en métal qui est pourvu d'un étrier 32'. Un ressort 32'a, prenant appui contre un dé fixe 29', et contre le fond du contact 34', tend à repousser vers le bas ce dernier, retenu en place par le fil fusible 33, comme en figure 5. La base isolante du fourreau 25' porte deux contacts fixes 35' et 36' similaires aux plots 35 et 36.

Le fonctionnement est autrement identique à ce qui a été décrit plus haut.

Le déconnecteur-limiteur suivant l'invention peut également être avantageusement doté d'un dispositif additionnel propre à améliorer encore la sécurité de fonctionnement du transformateur sur lequel il est monté.

On peut notamment craindre qu'un léger défaut d'isolation ne provoque dans la cuve du transformateur une surintensité qui est insuffisante pour provoquer la fusion de l'élément fusible 28 de l'un quelconque des trois déclencheurs, mais qui est néanmoins susceptible de provoquer l'échauffement intempestif du bain d'huile et l'explosion de la cuve.

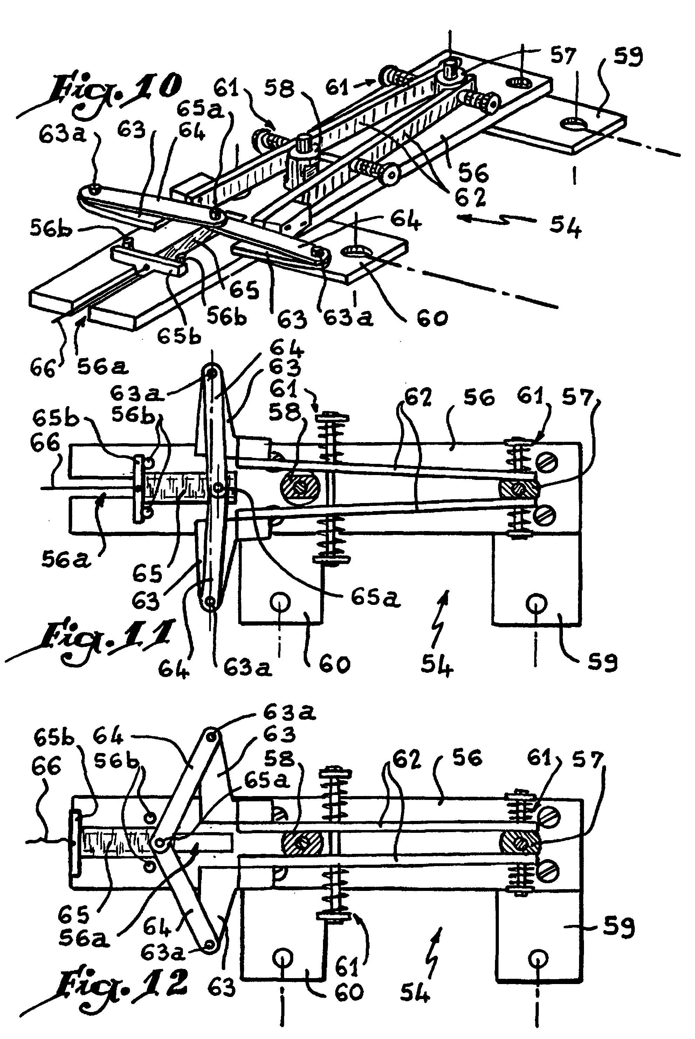

A la manière illustrée en figure 8, à la tête 26 de l'un au moins des trois déclencheurs 38, 39 ou 40 est fixé latéralement un guide tubulaire 49 dans l'ouverture duquel est monté un coulisseau 50 propre à se déplacer perpendiculairement à l'axe longitudinal du fourreau 25 du déclencheur envisagé. Ce fourreau 25 est découpé d'une lumière verticale afin que l'extrémité du coulisseau 50 puisse pénétrer à son intérieur ; cette extrémité est équipée d'une lame supérieure 51 et elle est profilée afin que sa partie inférieure 50a forme poussoir.

A côté du déclencheur envisagé est prévu un détecteur formé par un pressostat de type usuel dont la sonde est disposée à l'intérieur de la cuve du transformateur afin de déceler et de capter toute élévation anormale de la pression interne de ladite cuve. L'organe mobile 52 de ce pressostat se trouve placé en vis-à-vis de l'extrémité extérieure du coulisseau 50, comme montré en figure 8. A la position normale de cet organe 52, la lame de coupe 51 et le poussoir 50a n'interfèrent pas avec l'élément fusible 28 et le fil de retenue 33 du déclencheur.

En cas de surpression dans la cuve du transformateur, l'organe 52 se déplace (flèche 53 de figure 8) et repousse le coulisseau 50 dont la lame 51 vient sectionner le fil 33 et l'élément fusible 28, lequel est dévié latéralement par le poussoir 50a en vue d'éviter tout risque de formation d'arc. Bien évidemment la libération du doigt 31 assure l'application de la barrette 34 contre les plots 35 et 36, de sorte qu'on assiste à un fonctionnement identique à celui ci-dessus décrit en référence à figure 5 à 7.

Les trois déclencheurs assurent dans ces conditions la déconnexion totale du transformateur, de la même manière qu'en cas de surintensité.

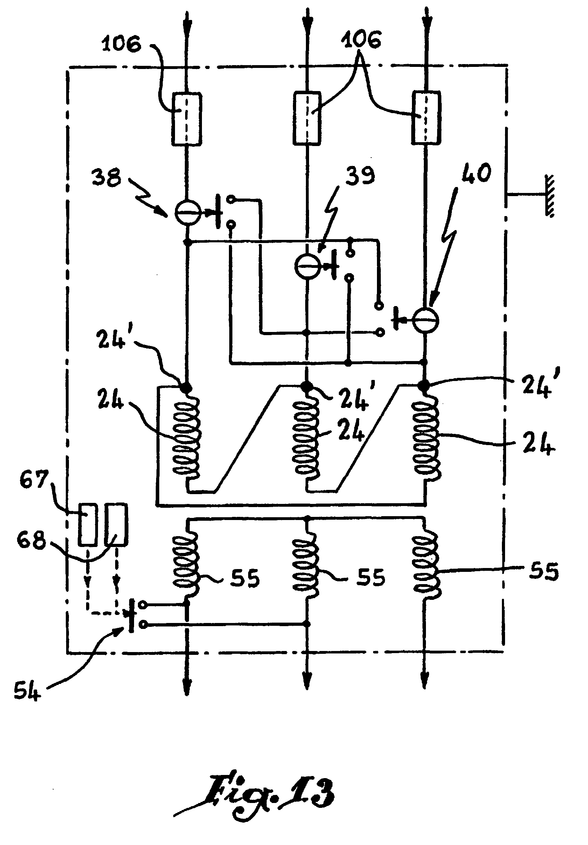

Figure 10 à 13 illustrent une autre forme de réalisation des moyens d'actionnement de sécurité propres à assurer le fonctionnement de l'un des déclencheurs en cas de modification accidentelle du niveau, de la température ou de la pression du bain d'huile.

Cette forme de réalisation fait appel à un court-circuiteur 54 qui est associé aux bobinages 55 du secondaire du transformateur à protéger. Ce court-circuiteur comprend un socle isolant 56 pourvu de deux plots 57 et 58, chacun de ceux-ci étant solidaire d'une barre 59, respectivement 60 liée à l'un des bobinages secondaires 55 précités. Contre les plots 57 et 58 sont élastiquement pressés, par exemple à l'aide de deux ensembles de ressorts 61, deux contacts mobiles 62 établis sous forme de lames métalliques dont les extrémités disposées au-delà du plot 58 sont équipées de deux bras transversaux opposés 63.

En bout de chaque bras 63 est attelée une biellette 64, les deux biellettes 64 étant par ailleurs attelées sur un pivot central 65a. Ce dernier est porté par un coulisseau 65 quidé dans une coulisse 56a pratiquée axialement dans le socle isolant 56.

Lors du fonctionnement normal du transformateur, le court-circuiteur 54 se trouve à la position armée illustrée en figure 10 et 11, en ce sens que le coulisseau 65 a été reculé jusqu'à ce que le pivot central 65a soit situé légèrement en arrière des pivots d'attelage 63a des biellettes 64 sur les bras 63. A cette position, rendue stable par butée d'une barrette transversale 65b du coulisseau 65 contre deux pions fixes 56b du socle isolant 56, les deux contacts 62, appliqués contre le plot 57, sont écartés du plot 58, si bien que les deux barres 59 et 60 ne sont pas connectées.

Au coulisseau 65 est attaché un lien 66 dont l'extrémité libre est rendue solidaire de l'organe mobile d'un détecteur 67 ou 68 (cf. figure 13) agencé pour capter les différences de niveau ou de température ou de pression du bain d'huile du transformateur. On conçoit que l'effet de traction exercée sur le lien 66 par suite d'une différence significative captée par l'un ou l'autre des deux détecteurs 67 et 68, a pour effet de déplacer axialement le coulisseau 65. Lorsque le mouvement du coulisseau 65 est tel que le pivot 65a a dépassé le point mort pour lequel il se trouve en alignement avec les pivots 63a, ledit coulisseau est brusquement repoussé en direction de l'extrémité libre de la coulisse 56a, si bien que les contacts 62 sont fermement appliqués par les ensembles de ressorts 61 contre le plot 58, comme illustré en figure 12.

Il est clair que les deux phases du secondaire 55 du tranformateur sont ainsi reliées l'une à l'autre à travers le court-circuiteur 54 (voir figure 13), de sorte que l'un au moins des déclencheurs 38, 39 ou 40 est actionné, en provoquant la déconnection totale du transformateur protégé.

## Revendications

1. Déconnecteur-limiteur de protection pour transformateur électrique triphasé dont les bobinages (24, 55) sont protégés par trois limiteurs de courant (106) disposés en amont des bornes d'entrée (24') des bobinages (24) du primaire,
ce déconnecteur-limiteur comprenant trois déclencheurs (4, 38-39-40) insérés entre les limiteurs de courant (106) et les bornes d'entrée (24') des bobinages (24), une surintensité localisée dans l'un quelconque de ces déclencheurs (4, 38-39-40) provoquant le fonctionnement de ce déclencheur,
**caractérisé en ce que** l'un quelconque de ces déclencheurs est agencé pour agir en cas de surintensité sur des moyens électro-mécaniques de court-circuitage (14-21, 34-42) agencés pour provoquer d'une part le fonctionnement des deux autres déclencheurs (4, 38-39-40) et d'autre part le fonctionnement des limiteurs de courant (106) en série aves lesdits deux autres déclencheurs et achever ainsi la déconnexion complète du transformateur.

2. Déconnecteur-limiteur suivant la revendication 1, **caractérisé en ce que** chacun des déclencheurs (4, 38-39-40) comprend un doigt mobile (10, 31) qui est retenu à l'encontre de moyens élastiques d'actionnement (11, 32a) par un fil fusible (12, 33) monté en parallèle avec l'élément fusible du déclencheur correspondant (6, 28), afin que ledit doigt, ainsi libéré quand ce déclencheur fonctionne, vienne actionner les moyens électro-mécaniques de court-circuitage (14-21, 34-42).

3. Déconnecteur-limiteur suivant l'une quelconque des revendications 1 et 2, **caractérisé en ce que** les moyens électro-mécaniques de court-circuitage sont constitués par un court-circuiteur (14) qui comprend un contact mobile (16) relié en permanence à la terre et retenu à l'encontre de moyens élastiques (17) par une gâchette (19) soumise à l'action de l'un quelconque des trois déclencheurs (4), lequel contact mobile (16), une fois libéré par la gâchette précitée, vient porter contre trois contacts fixes (21) reliés aux bornes d'entrée (24a) des bobinages (24) du primaire du transformateur.

4. Déconnecteur-limiteur suivant la revendication 3, **caractérisé en ce que** la gâchette (19) agit sur des billes (18) appliquées radialement conre la paroi du contact mobile (16) et comporte des emboutis (19a) qui permettent le déplacement radial desdites billes lorsque ladite gâchette a été déplacée par l'un quelconque des déclencheurs (4).

5. Déconnecteur-limiteur suivant l'une quelconque des revendications 3 et 4, **caractérisé en ce que** la gâchette (19) comporte trois bras radiaux (19b) disposés suivant les axes des déclencheurs (4) afin d'êttre actionnés par le doigt mobile (10) de celui desdits déclencheurs dont le limiteur de courant (6) a fonctionné.

6. Déconnecteur-limiteur suivant l'une quelconque des revendications 1 et 2, **caractérisé en ce que** les moyens électro-mécaniques de court-circuitage comprennent un circuit ouvert de commande (42) qui est lié aux trois bornes d'entrée (24a) des bobinages (24) afin que la fermeture de ce circuit sous l'effet du déplacement d'un organe mobile (34, 34') de l'un quelconque des déclencheurs (4, 38, 39, 40) assure, par court-circuit entre les deux autres phases, la déconnexion complète du transformateur.

7. Déconnecteur-limiteur suivant les revendications 2 et 6, **caractérisé en ce que** l'organe mobile de chaque déclencheur (38, 39, 40) est constitué par un contact (34, 34') propre à venir s'appliquer simultanément contre deux plots fixes (35, 35', 36, 36') intégrés au circuit de commande (42) de façon à fermer ce dernier lors du fonctionnement du déclencheur correspondant.

8. Déconnecteur-limiteur suivant la revendication 7, **caractérisé en ce qu'**il comprend des moyens d'actionnement de sécurité (50, 51) propres à assurer le fonctionnement de l'un des déclencheurs (6, 28) sous l'effet de la modification accidentelle d'un paramètre autre qu'une surintensité.

9. Déconnecteur-limiteur suivant les revendications 2 et 8, spécialement destiné à équiper les transformateurs dans lesquels les limiteurs de courant sont constitués par des fusibles, **caractérisé en ce que** les moyens d'actionnement de sécurité comprennent un dispositif propre à assurer le sectionnement mécanique de l'élément fusible (28) et du fil de retenue (33) de chaque déclencheur (38, 39, 40).

10. Déconnecteur-limiteur suivant la revendication 9, **caractérisé en ce que** le dispositif de sectionnement mécanique comprend un coulisseau (50) qui est soumis à l'action de l'organe mobile (52) d'un détecteur associé au transformateur et qui porte une lame de coupe (51) agencée pour sectionner l'élément fusible (28) et le fil de retenue (33) lors du déplacement dudit coulisseau sous l'effet de la modification d'un paramètre.

11. Déconnecteur-limiteur suivant la revendicaiton 8, **caractérisé en ce que** les moyens d'actionnement de sécurité sont constitués par un court-circuiteur (54) associé au secondaire du transformateur à protéger.

12. Déconnecteur-limiteur suivant la revendication 11, **caractérisé en ce que** le court-circuiteur (54) comprend deux contacts mobiles (62) pressés par des moyens élastiques (61) contre deux plots fixes (57, 58) qui sont reliés à deux bobinages secondaires (55) du transformateur, lesquels contacts mobiles sont maintenus écartés de l'un au moins desdits plots par un système de biellettes (64) à dépassement de point mort commandé par un coulisseau (65) lié à l'organe mobile d'au moins un détecteur de variation de paramètre (67, 68).

13. Déconnecteur-limiteur suivant les revendications 2 et 6, **caractérisé en ce que** l'organe mobile de chaque déclencheur est constitué par un contact cylindrique (34') guidé dans un fourreau isolant (25') et associé à un ressort (32'a) qui, lors du sectionnement du fil de retenue (33), l'applique contre deux plots fixes (35', 36').

## Patentansprüche

1. Schutzausschalter-Begrenzer für einen elektrischen Drehstromtransformator, dessen Wicklungen (24, 55) durch drei Strombegrenzer (106) geschützt sind, die stromaufwärts zu den Eingangsklemmen (24') der Wicklungen (24) der Primärseite angeordnet sind, wobei dieser Ausschalter-Begrenzer drei Auslöser (4, 38-39-40) umfasst, die zwischen den Strombegrenzern (106) und den Eingangsklemmen (24') der Wicklungen (24) angeordnet sind, wobei ein in einem der Auslöser (4, 38-39-40) lokalisierter Überstrom die Funktion dieses Auslösers hervorruft,
**dadurch gekennzeichnet, daß** einer dieser Auslöser derart angeordnet ist, daß er im Falle eines Überstroms auf elektromechanische Kurzschlussmittel (14-21, 34-42) einwirkt, die derart angeordnet sind, daß sie einerseits die Funktion der beiden anderen Auslöser (4, 38-39-40) und andererseits die Funktion der Strombegrenzer (106) in Serie mit den beiden anderen Auslösern hervorrufen und auf diese Weise die völlige Abschaltung des Transformators beenden.

2. Ausschalter-Begrenzer nach Anspruch 1, **dadurch gekennzeichnet, daß** jeder der Auslöser (4, 38-39-40) einen beweglichen Finger (10, 31) umfasst, der gegen elastische Betätigungsmittel (11, 32a) durch einen Schmelzdraht (12, 33) gehalten wird, der parallel mit dem Schmelzelement des entsprechenden Auslösers (6, 28) montiert ist, damit der Finger, der auf diese Weise, wenn dieser Auslöser funktioniert, freigegeben wird, die elektromechanischen Kurzsschlussmittel (14-21, 34-42) betätigt.

3. Ausschalter-Begrenzer nach einem der Ansprüche 1 und 2, **dadurch gekennzeichnet, daß** die elektromechanischen Kurzschlussmittel von einer Kurzschlussvorrichtung (14) gebildet sind, die einen beweglichen Kontakt (16) umfasst, der ständig geerdet ist und gegen elastische Mittel (17) durch einen Drücker (19) gehalten wird, der der Wirkung eines der drei Auslöser (4) unterworfen ist, welcher bewegliche Kontakt (16), wenn er von dem vorgenannten Drücker freigegeben ist, gegen drei feststehende Kontakte (21). die mit den Eingangsklemmen (24a) der Wicklungen (24) der Primärseite des Transformators verbunden sind, angelegt wird.

4. Ausschalter-Begrenzer nach Anspruch 3, **dadurch gekennzeichnet, daß** der Drücker (19) auf Kugeln (18) einwirkt, die radial gegen die Wand des beweglichen Kontakts (16) angelegt werden, und Manschetten (19a) umfasst, die die Radialverschiebung der Kugeln ermöglichen, wenn der Drücker von einem der Auslöser (4) verschoben wurde.

5. Ausschalter-Begrenzer nach einem der Ansprüche 3 und 4, **dadurch gekennzeichnet, daß** der Drücker (19) drei Radialarme (19b) umfasst, die entlang der Achsen der Auslöser (4) angeordnet sind, um von dem beweglichen Finger (10) jenes der Auslöser betätigt zu werden, dessen Strombegrenzer (6) in Betrieb war.

6. Ausschalter-Begrenzer nach einem der Ansprüche 1 und 2, **dadurch gekennzeichnet, daß** die elektromechanischen Kurzschlussmittel eine offene Steuerschaltung (42) umfassen, die mit drei Eingangsklemmen (24a) der Wicklungen (24) verbunden ist, damit der Verschluss dieser Schaltung unter der Wirkung der Verschiebung eines beweglichen Elements (34, 34') eines der Auslöser (4, 38, 39, 40) durch Kurzschluss zwischen den beiden anderen Phasen die völlige Abschaltung des Transformators sicher stellt.

7. Ausschalter-Begrenzer nach den Ansprüchen 2 und 6, **dadurch gekennzeichnet, daß** das bewegliche Element jedes Auslösers (38, 39, 40) von einem Kontakt (34, 34') gebildet ist, der gleichzeitig an zwei feststehende Kontaktstücke (35, 35', 36, 36'), die in die Steuerschaltung (42) integriert sind, angelegt werden kann, um letztgenannte bei Betrieb des entsprechenden Auslösers zu schließen.

8. Ausschalter-Begrenzer nach Anspruch 7, **dadurch gekennzeichnet, daß** er Sicherheitsbetätigungsmittel (50, 51) umfasst, die die Funktion eines der Auslöser (6, 28) unter der Wirkung der zufälligen Änderung eines anderen Parameters als des Überstroms sicher stellen kann.

9. Ausschalter-Begrenzer nach den Ansprüchen 2 und 8, im Speziellen dazu bestimmt, in Transformatoren verwendet zu werden, in denen die Strombegrenzer von Schmelzsicherungen gebildet sind, **dadurch gekennzeichnet, daß** die Sicherheitsbetätigungs-mittel eine Vorrichtung umfassen, die die mechanische Trennung des Schmelzelements (28) und des Haltedrahts (33) jedes Auslösers (38, 39, 40) sicher stellen kann.

10. Ausschalter-Begrenzer nach Anspruch 9, **dadurch gekennzeichnet, daß** die mechanische Trennvorrichtung einen Schieber (50) umfasst, der der Wirkung des beweglichen Elements (52) eines mit dem Transformator verbundenen Detektors unterworfen ist und ein Schneidblatt (51) trägt, das derart angeordnet ist, daß es das Schmelzelement (28) und den Haltedraht (33) bei der Verschiebung des Schiebers unter der Wirkung der Änderung eines Parameters trennt.

11. Ausschalter-Begrenzer nach Anspruch 8, **dadurch gekennzeichnet, daß** die Sicherheitsbetätigungs-mittel von einer Kurzschlussvorrichtung (54) gebildet sind, die mit der Sekundärseite des zu schützenden Transformators verbunden ist.

12. Ausschalter-Begrenzer nach Anspruch 11, **dadurch gekennzeichnet, daß** die Kurzschlussvorrichtung (54) zwei bewegliche Kontakte (62) umfasst, die durch elastische Mittel (61) gegen zwei feststehende Kontaktstücke (57, 58) gedrückt werden, die mit zwei Sekundärwicklungen (55) des Transformators verbunden sind, wobei die beweglichen Kontakte zu mindestens einem der Kontaktstücke durch ein Schwingarmsystem (64) mit Totpunktüberschreitung in einem Abstand gehalten werden, das von einem Schieber (65) gesteuert wird, der mit dem beweglichen Element von mindestens einem Detektor einer Parameteränderung (67, 68) verbunden ist.

13. Ausschalter-Begrenzer nach den Ansprüchen 2 und 6, **dadurch gekennzeichnet, daß** das bewegliche Element jedes Auslösers von einem zylindrischen Kontakt (34') gebildet ist, der in einer Isolierhülle (25') geführt wird und mit einer Feder (32'a) verbunden ist, die bei der Trennung des Haltedrahts (33) diesen gegen zwei feststehende Kontaktstücke (35', 36') anlegt.

## Claims

1. Protection disconnector-limiter for a three-phase electric transformer, the windings (24, 55) of which are protected by three current limiters (106) which are disposed upstream of the input terminals (24') of the primary windings (24), this disconnector-limiter comprising three circuit breakers (4, 38-39-40) inserted between the current limiters (106) and the input terminals (24') of the windings (24), a localised excess current in any of these circuit breakers (4, 38-39-40) inducing the functioning of this circuit breaker,
**characterised in that** any of these circuit breakers is designed to act in the case of an excess current upon electromechanical short-circuit means (14-21, 34-42) provided to induce on the one hand the functioning of the two other circuit breakers (4, 38-39-40) and on the other hand the functioning of the current limiters (106) in series with said two other circuit breakers and thus to achieve the complete disconnection of the transformer.

2. Disconnector-limiter according to claim 1, **characterised in that** each of the circuit breakers (4, 38-39-40) comprises a movable finger (10, 31) which is retained in opposition to elastic actuation means (11, 32a) by a fusible wire (12, 33) which is mounted in parallel with the fusible element of the corresponding circuit breaker (6, 28) in order that said finger, thus liberated when this circuit breaker functions, proceeds to actuate the electromechanical short-circuit means (14-21, 34-42).

3. Disconnector-limiter according to any of the claims 1 and 2, **characterised in that** the electromechanical short-circuit means are formed by a short-circuiting device (14) which comprises a movable contact (16) which is connected permanently to earth and is retained in opposition to elastic means (17) by a catch (19) which is subjected to the action of any of the three circuit breakers (4), which movable contact (16), once liberated by the aforementioned catch, comes to bear against three fixed contacts (21) which are connected to the input terminals (24a) of the primary windings (24) of the transformer.

4. Disconnector-limiter according to claim 3, **characterised in that** the catch (19) acts upon balls (18), which are applied radially against the wall of the movable contact (16), and comprises embossings (19a) which permit the radial displacement of said balls when said catch has been displaced by any of the circuit breakers (4).

5. Disconnector-limiter according to any of the claims 3 and 4, **characterised in that** the catch (19) comprises three radial arms (19b) which are disposed according to the axes of the circuit breakers (4) in order to be actuated by the movable finger (10) of that of said circuit breakers, the current limiter (6) of which has functioned.

6. Disconnector-limiter according to any of the claims 1 and 2, **characterised in that** the electromechanical short-circuit means comprise an open control circuit (42) which is connected to three input terminals (24a) of the windings (24) in order that the closure of this circuit under the effect of the displacement of a movable member (34, 34') of any of the circuit breakers (4, 38, 39, 40) ensures, by a short-circuit between the other two phases, the complete disconnection of the transformer.

7. Disconnector-limiter according to claims 2 and 6, **characterised in that** the movable member of each circuit breaker (38, 39, 40) is formed by a contact (34, 34') adapted to become applied simultaneously against two fixed studs (35, 35', 36, 36') which are integrated in the control circuit (42) in such a manner as to close the latter during the functioning of the corresponding circuit breaker.

8. Disconnector-limiter according to claim 7, **characterised in that** it comprises safety actuation means (50, 51) adapted to ensure the functioning of one of the circuit breakers (6, 28) under the effect of the accidental modification of a parameter other than that of an excess current.

9. Disconnector-limiter according to claims 2 and 8, specially intended to equip transformers in which the current limiters are formed by fuses, **characterised in that** the safety actuation means comprise a device adapted to ensure the mechanical sectioning of the fusible element (28) and of the retaining wire (33) of each circuit breaker (38, 39, 40).

10. Disconnector-limiter according to claim 9, **characterised in that** the mechanical sectioning device comprises a slide (50) which is subjected to the action of the movable member (52) of a detector which is associated with the transformer and carries a cutting blade (51) which is provided in order to section the fuse element (28) and the retaining wire (33) during the displacement of said slide under the effect of the modification of a parameter.

11. Disconnector-limiter according to claim 8, **characterised in that** the safety actuation means are formed by a short-circuiting device (54) which is associated with the secondary winding of the transformer which is to be protected.

12. Disconnector-limiter according to claim 11, **characterised in that** the short-circuiting device (54) comprises two movable contacts (62) which are pressed by elastic means (61) against two fixed studs (57, 58) which are connected to two secondary windings (55) of the transformer, said movable contacts are maintained separated from one at least of said studs by a system of rods (64) with overshooting of the dead centre controlled by a slide (65) which is linked to the movable member by at least one parameter variation detector (67, 68).

13. Disconnector-limiter according to claims 2 and 6, **characterised in that** the movable member of each circuit breaker is formed by a cylindrical contact (34') which is guided in an insulating sleeve (25') and is associated with a spring (32'a) which, during the sectioning of the retaining wire (33), applies it against two fixed studs (35', 36').
